(19) Europäisches Patentamt
European Patent Office
Office européen des brevets

(11) Publication number: **0 295 096 B1**

(12) **EUROPEAN PATENT SPECIFICATION**

(45) Date of publication of patent specification: **01.09.93**

(51) Int. Cl.[5]: **G01V 1/00**, G01V 1/30

(21) Application number: **88305269.8**

(22) Date of filing: **09.06.88**

(54) **Method of surveying and determining thicknesses and properties of subsurface ground layers without excavation.**

(30) Priority: **11.06.87 JP 144195/87**

(43) Date of publication of application:
**14.12.88 Bulletin 88/50**

(45) Publication of the grant of the patent:
**01.09.93 Bulletin 93/35**

(84) Designated Contracting States:
**DE FR GB IT NL SE**

(56) References cited:
**DE-B- 1 102 420**
**GB-A- 1 317 765**
**US-A- 3 029 894**
**US-A- 4 110 729**

**BULLETIN DE LIAISON DES LABORATOIRES ROUTIERS, no. 32, June/July 1968, pages 28,29, Paris, FR; M. CHAMPION et al.: "Utilisation du déflectographe pour l'étude des élargissements de chaussées"**

**PATENT ABSTRACTS OF JAPAN, vol. 01, no. 250 (P-491); & JP-A-61 080 085 (NAGANORI SATO) 23-04-1986**

(73) Proprietor: **Satoh, Takenori**
**10-5-404, Takashimadaira 3-chome**
**Itabashi-ku Tokyo(JP)**

(72) Inventor: **Satoh, Takenori**
**10-5-404 Takashimadaira 3-chome**
**Itabashi-ku Tokyo(JP)**
Inventor: **Meshida, Michio**
**1958-243 Sashioogi**
**Omiya-shi Saitama(JP)**

(74) Representative: **Pendlebury, Anthony et al**
**PAGE, WHITE & FARRER 54 Doughty Street**
**London WC1N 2LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 295 096 B1

## Description

The present invention relates to a method of surveying and determining thicknesses and properties of subsurface ground layers without excavation.

Although the present invention is applicable to virtually all kinds of sites, improved or unimproved, paved or unpaved, it is particularly useful for non-destructively surveying and determining thicknesses and properties of subsurface layers of roads, runways or aprons in airports, parking areas, school grounds, athletic grounds, factory premises or other sites where ground surfaces are improved or paved and, therefore, destruction or excavation of the ground is particularly undesirable.

A paved road or highway is a typical object to which the present invention can be effectively applied. Therefore, for convenience, the discussion and explanation about the present invention will be made in reference particularly to a case of a paved road. One should understand, however, that the present invention can equally be applicable to almost all kinds of sites.

In case of construction of a paved road, for example, the thicknesses and materials of its top layers and the subbase are normally decided after conducting a penetration test to the subgrade soil and obtaining the bearing strength ratio, such as CBR (California Bearing Ratio) value, and in consideration of anticipated traffic densities, other traffic conditions such as vehicle weights and environmental conditions.

Therefore, the data regarding the original subsurface conditions of paved roads, such as layer thicknesses and layer properties, are normally already available. Nevertheless, in case maintenance, repair, restoration or repavement of a road is required, it becomes often necessary to reexamine the thicknesses and properties of the subsurface layers of the road from the top layer to the subgrade in order to confirm the serviceability of the road. The thicknesses and properties of the subbase and the subgrade soil of a road tend to change after having been subjected to the traffic or weathering for years. Furthermore, the top layer of the road may also change in its thickness and property because of maintenances and repairs performed after the road was constructed. Accordingly, it is necessary to reexamine the thicknesses and properties of the subsurface layers in order to know the current conditions.

Pavements may be made to improved but unpaved roads such as graveled roads or macadam roads, or to the roads having a surface treatment such as anti-dust surface treatment or bituminous surface treatment. In such a case, studies have to be first made in order to determine whether the current road surface should be regarded as the top surface of the subgrade or a top layer to a certain depth should be regarded as a new subbase layer. It is, therefore, still necessary to survey the subsurface layer thicknesses and properties, such as the CBR, grain sizes or soil characteristics, of the roads which are to be improved.

A conventional method for surveying subsurface layer thicknesses and properties is by boring. It is, however, not necessarily an easy and speedy method. Boring may be made with less difficulty to an unpaved road or site. Needless to say, in order to examine a subbase and a subgrade by means of boring, a section of the top layer of the road must be first broken and eliminated. Furthermore, the eliminated section must later be filled and restored. The boring method is, therefore, labor and time taking and uneconomical. Under the circumstances, the development of a reliable non-destructive subsurface ground surveying method has been a long awaited need in the industry.

DE-B-1101420 describes a method for determining the thickness pattern of an ore deposit. This is acheived by initially drilling a hole to the ore to determine the thickness of the ore at that specific location and thereafter using seismic reflection techniques to determine the thickness of the ore layer at the other locations by an examination of the reflection constant at selected frequencies of the shockwave. This technique requires the low frequency components of the shock wave to be filtered out and the high frequency components to be amplified and the selected frequency to have a wavelength approximately equal to the expected thickness of the ore layer at the other locations.

The present invention provides a method of surveying and determining thicknesses and properties of subsurface layers of the ground without excavation, said method comprising the steps of:

a) positioning at predetermined intervals on the ground a ground vibrator which transmits waves of vibration energy of predetermined frequencies and a plurality of detectors which detect said waves of vibration energy;

b) exciting the ground by said ground vibrator at said predetermined frequencies allowing said waves of vibration energy to propagate through said subsurface layers;

c) detecting said waves of vibration energy by said detectors and obtaining propagation velocities of said waves for each of said predetermined frequencies;

d) calculating the respective wavelengths of said predetermined frequencies and determining one half wavelengths for each of said predetermined frequencies;

e) identifying each of said propagation velocities with the average propagation velocity of the corresponding wave propagated through the subsurface ground at the depth equal to the corresponding determined one half wavelength;

f) determining a first correlation between the depth of the subsurface ground and the propagation velocity for a plurality of depths; and

g) determining the layer structure and the thickness of each of said subsurface layers utilizing said first correlation.

The present invention provides a method of surveying individual subsurface layer thicknesses and properties of the ground, such as a road or other sites, by obtaining propagation velocities of vibration energy which propagates through the subsurface layers ranging from the top surface to at least a subgrade section. The survey utilizes a ground vibrator, which generates vibration energy of predetermined frequencies to excite the ground, a set of measuring equipment including a plurality of vibration detectors and a computing device by which propagation velocities of the vibration energy are obtained. The vibrator and the detectors are placed on the ground at predetermined intervals in various arrangements. The vibrator generates vibration energy of predetermined frequencies, the vibration detectors pick up the propagated vibration energy, and the computing device calculates the propagation velocities of the vibration energy which has propagated through the subsurface layers ranging over from the top surface to the subgrade.

The measuring equipment is available in the market. One example of the measuring equipment which can be used for the present invention is Sato's Automatic Geological Research System (Model GR81∅ series) manufactured by Sato Geological Research system Co., Ltd., Tokyo, Japan. Individual instruments of the measuring equipment are readily available in the market. Some of the suppliers and model numbers of such instruments are named afterward. Using the non-excavating ground survey system, including a ground vibrator and vibration detectors, measurements were made by us at various road sites for the propagation velocities of the vibration energy which propagated through the subsurface ground layers covering from the respective road surfaces to the depths including sections of the respective subgrades. On the other hand, by a conventional excavating method, we also made surveys of the thicknesses and the types of the top layers, the thicknesses of the subbases and the subgrades, the grain sizes of the constituent materials, the CBR values, the properties of the soil, etc. at the sites. We then comparatively analyzed the data of the propagation velocities of the vibration energy obtained by the non-excavating measurement method of the present invention and the data obtained by the conventional method. Consequently, we not only discovered that we were able to know the thicknesses of individual subsurface layers covering the depths from the road surfaces to the subgrades from knowing the differences of the propagation velocities of the vibration energy but also discovered the existence of clear correlation between the CBR values of the constituent materials and the propagation velocities of the vibration energy and further discovered that we can determine the properties of the individual subsurface layers utilizing the correlation. We have completed the present invention after obtaining sufficient data and conducting further studies on them.

Embodiments of the invention will now be described by way of example only with reference to the accompanying drawings in which:-

Fig. 1 is a schematic diagram showing a basic arrangement of the individual instruments of the system used for the present invention.

Fig. 2 is an exemplified schematic sectional view showing a ground vibrator, two vibration detectors, and subsurface layers of a ground which can be surveyed by means of the present invention.

Fig. 3 is a second exemplified schematic sectional view showing a ground vibrator, three vibration detectors, and subsurface layers of a ground which can be surveyed by means of the present invention.

Fig. 4 is a third exemplified schematic sectional view showing a ground vibrator, five vibration detectors, and subsurface layers of a ground which can be surveyed by means of the present invention.

Fig. 5 is a fourth exemplified schematic sectional view showing a ground vibrator, four vibration detectors, and subsurface layers of a ground which can be surveyed by means of the present invention.

Fig. 6 is a schematic sectional view showing a subsurface layer structure of a road which can be surveyed by means of the present invention.

Fig. 7 is a graph showing plotted data obtained by means of the present invention. The graph shows the correlation between subsurface layer depths of a road and average propagation velocities of the vibration energy.

Fig. 8 is a graphic diagram, produced from the data shown in Fig. 7, showing the correlation between individual depths of subsurface layers and propagation velocities of the vibration energy.

Fig. 9 is a graph showing the correlation between CBR values actually obtained and propagation velocities of the vibration energy in case the velocities are less than 2∅∅ meters per second.

Fig. 1∅ is a graph showing the correlation between CBR values actually obtained and propagation velocities of the vibration energy in case the velocities are more than 2∅∅ meters per second.

FIG. 1 schematically shows an example of basic arrangement of the instruments used for the present invention in order to measure the propagation velocities of the vibration energy at various subsurface depths of a ground. In FIG. 1, numeral 1 denotes a ground, 2 a ground vibrator positioned on the ground 1, 3 a plurality of vibration energy detectors positioned at predetermined distances from the vibrator 1, 4 an electric generator, 5 a programmable ocsillator, 6 a power amplifier, 7 a display, 8 a computer, 9 a filter, 1∅ a signal amplifier, and 11 an X-Y plotter. The entire system including the above instruments is normally carried on a vehicle.

Only the vibrator 2 and the detectors 3 are positioned directly on the ground 1 when the measurement for the survey takes place. The electric generator 4 provides all the electrical power required for the measurement.

The ocsillator 5 generates a modulated signal wave, whose parameters, such as amplitude, frequency, and transmit timings are programmable. One of the ocsillator suppliers is Hewlett Packard Co., Ltd., U.S.A. (e.g. Model 8165A). The power amplifier 6 amplifies the modulated signal wave transmitted from the oscillator 5 and provides the output power to the vibrator 2. Some of the power amplifier suppliers are: Accoustic Power System, Inc., U.S.A. (Amplifier for Model 113 series); ADI, Inc., U.S.A. (Model N-3∅∅ etc.); and Derritron Electronics, Ltd., England. The vibrator 2 is of a magnetic and high-fidelity type which converts the output power received from the power amplifier 6 to a physical vibratory force and transmits vibration energy having a predetermined combination of frequencies and amplitudes to the ground. Vibrators of various capacities are available. A vibrator of a proper type is to be selected according to the specific kind and condition on the ground to be surveyed. Among the suppliers for the vibrator 2 are: Acoustic Power System, Inc. (Shaker for Model 113 series), U.S.A.; ADI, Inc. (Model AV series), U.S.A.; and Derritron Electronics, Ltd., England. Each of the detectors 3 detects the vibration energy propagated from the vibrator 2, converts the vibration energy to an electrical signal and transmits the signal to the signal amplifier 1∅. The number of the detectors 3 may be more than two although FIG. 1 shows only two detectors. The signal amplifier 1∅ amplifies the electrical signal received from the detectors 3 to a proper amplitude and transmits the amplified signal to the computer 8 through the filter 9. There are many suppliers for the signal amplifier 1∅. Philips, Netherlands (e.g. Models PR9252, PR7413) is one of them. IBM's PC/AT computer is one of the most popular computers which is usable for the computer 8. The filter 9 eliminates noise components of the bibratory signals which are originated from various background vibratory sources such as the traffic on the ground and the wind. One of the suppliers for the filter 9 is Wavetek, Inc., U.S.A (Model 7∅∅ series). The display 7 is an oscilloscope which monitors the waveforms of the vibratory signals or the results of calculations of the propagation velocities. Tektronix, Inc., U.S.A. (e.g. Model 335) is one of the display suppliers. The X-Y plotter 11 prints out the data obtained such as the average propagation velocities along X-axis and the depths from the ground surface along X-axis. Hewlett Packard Co., Ltd., U.S.A. (e.g. Model 744∅A) is one of the suppliers for the X-Y plotter 11.

In the embodiment shown in FIG. 1 two detectors are used. More than two detectors, however, may be used in other embodiments. The accuracies of the data obtained may somewhat be affected by the object of the survey, the depth from the ground surface to be surveyed, and the properties of the subbase or the subgrade. Better accuracies can be obtained by properly selecting types of the vibrator and the detectors or the number of the detectors and the conditions as to how the vibrator and the detectors are positioned on the ground.

Examples of various numbers of the detectors and positioning conditions are shown in the sectional views in FIGS. 2 to 5. For example, the center-to-center distance between the vibrtator 2 and the detector 3 which is closest to the vibrator may be set for 25cm and the center-to-center distance between the adjacently positioned detectors 3 may be set for 2∅cm. The numbers of the detectors are 2, 3, and 5 in the embodiments shown in FIG. 2, FIG. 3, and FIG. 4, respectively. In the embodiment shown in FIG. 5, two units of the detectors 3 are disposed on each of the opposite sides of the vibrator 2.

Propagation velocities of the vibration energy transmitted from the vibrator 2 can determined between any two units of detectors 3 by obtaining the differential of the timings when the vibration energy is detected by the selected pair of detectors 3. The detectors 3 in FIGS. 2 to 5 are shown paired by reference lines in various combinations. It indicates that the propagation velocity is measured between each paired detectors. In the embodiments shown in FIGS. 2, 3, and 5, propagation velocities are measured between two adjacent detectors. Whereas, in the embodiment shown in FIG. 4, propagation velocities are measured between two detectors interposed by another detector. Measurement accuracies can be increased by properly selecting the detectors and their positions or increasing the number of pairs of the detectors to obtain larger a quantity of data of the time differentials.

The measurement is made for the propagation velocities of the surface waves of the vibration energy transmitted from the vibrator 2 to the ground. The elasticity of a propagating velocity of the vibration energy can be regarded as the average velocity within the subsurface area of the ground ranging from the ground surface to the depth equal to one half (1/2) of the wave length (λ) of the vibration energy. Therefore, the propagation velocity (V) obtained from the measurement can be evaluated to be the average propagation velocity ($\overline{V}$) of the wave of the vibration energy propagated through the subsurface ground possessing average characteristics in its property and having the depth equal to one half (1/2) of the wave length (λ).

Namely, the measurement is done by first generating a wave of vibration energy having a certain frequency by the vibrator 2, then picking up the timings of the propagated waves by a plurality of the detectors 3 positioned on the ground, and calculating the propagation velocity of the wave through the subsurface ground. Needless to say, the frequency can be converted to a wave length. The propagation velocity of the wave thus obtained can be regarded as the average propagation velocity through the subsurface ground covering from the ground surface to the depth equal to one half (1/2) of the wave length. Since the depth is represented by the wavelength, average propagation velocities of the vibration energy propagated through subsurface ground of various predetermined depths can be obtained by applying to the ground various frequencies of the vibration corresponding to the respective predetermined depths.

Once the correlation between the depth of the subsurface ground and the propagation velocity of the wave is determined for various depths, the layer structure of the subsurface ground can also be determined. Then, the thickness of each of the constituent layers and the wave propagation velocity of each layer can be determined.

The wave propagation velocity of each layer can normally be obtained from the measured average wave propagation velocity ($\overline{V}$) by the following formula:

$$V_n = \frac{D_n \cdot \overline{V}_n - D_{n-1} \cdot \overline{V}_{n-1}}{D_n - D_{n-1}}$$

Where,

$V_n$: Wave propagation velocity (m/sec) for the layer ranging from depth n to depth n-1

$D_n$: Depth point n (m)

$D_{n-1}$: Depth point n-1 (m)

$\overline{V}_n$: Average wave propagation velocity (m/sec) for the layer ranging from the ground surface to the depth point n

$\overline{V}_{n-1}$: Average wave propagation velocity (m/sec) for the layer ranging from the ground surface to the depth point n-1

An example of measurements by the above measurement method will now be described. FIG. 6 shows a schematic sectional view of a subsurface layer structure of a road. In FIG. 6, numeral 21 denotes a surface layer which is made of an asphalt mixture, numeral 22 an upper subbase layer, numeral 23 a lower subbase layer, numeral 24 an upper subgrade layer, and numeral 25 a lower subgrade layer. FIG. 7 shows an example of the results of the measurement obtained from the layer structure as shown in FIG. 6. In FIG. 7, the X-axis and the Y-axis represent average wave propagation velocity $\overline{V}$ (m/s) and depth (m), respectively. FIG. 8 shows the value of the wave propagation velocity of each of the layers as obtained from the data shown in FIG. 7. In FIG. 8, the X-axis and the Y-axis represent wave propagation velocity V (m/s) and depth (m), respectively. The data shown in FIGS. 7 and 8 can be automatically obtained by mathematical operations. As observed in FIG. 8, the layer thicknesses differentiated by the respective wave propagation velocities distinctly reflect the layer structure shown in FIG. 6.

Upon studying the data obtained by surveying a subsurface structure of a road, we discovered that there was a definite correlation between the bearing strength ratios (CBR, modified CBR, etc.) of the materials which constituted the subbases and the subgrades of the road and the wave propagation velocities. An example of such correlation is shown in FIGS. 9 and 1Ø. FIGS. 9 and 1Ø show the correlation between the CBR values of the materials which constitute the subbases and the subgrades of the road and the wave propagation velocities.

As shown in FIGS. 9 and 1Ø, the CBR is divided into two groups. One group corresponds to the wave propagation velocities of less than 2ØØm/sec, namely V<2ØØm/sec, as shown in FIG. 9. The other group corresponds to the wave propagation velocities of more than 2ØØm/sec, namely V>2ØØm/sec, as shown in FIG. 1Ø. It can be observed in each of the graphs of FIGS. 9 and 1Ø that there is a definite correlation between the CBR values and the wave propagation velocities.

Utilizing such correlation, CBR values of the materials constituting subbases and subgrades of a road can be calculated.

Thus, thickness and property of each of subsurface layers of a grounds, such as a road, can now be surveyed and determined by the above described non-excavating survey method. The properties of the layers can also be expressed in other units, such as elastisity coefficient, N-value of the cone penetrating test, cone bearing value, or cone value.

Next, the features and effects of the ground surveying method of the present invention will be summarized below:

(1) Apply vibration energy to the ground to be surveyed by a specified vibrator; measure the propagation velocities of the vibration energy; obtain propagation velocities and layer thicknesses of the respective constituent subsurface layers; and specifically determine the layer properties utilizing the correlation between the propagation velocities and the layer properties.

(2) The subsurface ground survey method of the present invention does not require a large space for the work; the measurement can be done comparatively easily within a short period of time; thus the labor, the time and the cost can be saved substantially.

(3) The survey can be performed without destroying the ground. Therefore, unlike the conventional survey method, it is not necessary to restore or resurface the ground after the survey.

(4) The survey can be easily repeated and substantially the same data can reproducively be obtained.

(5) The layer thicknesses and properties obtained by the survey method according to the present invention agree to those obtained by conventional methods within a practically allowable tolerance.

(6) Any voids in the ground, metal pipes (e.g. water pipes, gas pipes), concrete pipes, and other man-made objects can also be detected by the survey method of the present invention.

Because of the features and effects mentioned above, the non-destructive survey method of the present invention can be effectively utilized in order to determine thicknesses and properties of the subsurface layers of not only roads but also other cites, paved or unpaved, such as factory premises, playgrounds, athletic grounds, and parking areas.

Next, we will describe an actual result of a survey conducted by the method according to the present invention. In the survey, thickness of each of the subsurface layers and bearing strength ratios of the subbase and the subgrade soil were determined.

An Example of Survey:

The Object of the Survey: A Road with Asphalt Pavement

A section of the pavement was removed, the subbase material and the subgrade soil were sampled, and adjusted CBR values of the materials of the subbase and CBR values of the subgrade soil were obtained by a conventional excavating method.

As a result, it was revealed that the surface layer consisted of 4cm-thick heat-applied asphalt, the next layer was the upper subbase layer consisting of 2ØOcm-thick granularly crashed stones having a measured CBR value of 113%., still next layer was the lower subbase layer consisting of 3Øcm-thick cut and crashed stones having a measured adjusted CBR value of 69%, and underneath which was the subgrade soil having a measured CBR value of 1.8%.

At the same site, vibrations of various frequencies were generated by a vibrator; correlation between the depths and the propagation velocities of the vibration energy were determined; and the thickness of each layer and the corresponding propagation velocity were obtained. As a result, the layer thicknesses obtained by the method of the present invention agreed with the data obtained by excavating and directly measuring the layer thicknesses. As to the upper subbase, the lower subbase, and the subgrade soil, their CBR values were obtained from the propagation velocities of the vibration energy by utilizing the graphs of FIGS. 9 and 1Ø and the values were compared with those obtained by means of the direct measurement. The results are shown in Table 1 below. In the table, the CBR values of the upper subbase and the lower subbase are adjusted CBRs. The measurement of the propagation velocities was repeated three times. Accordingly, three sets of the data are provided under "Measurement No." 1, 2 and 3 in Table 1.

| Layer Surveyed | Wave Propagation Velocity (m/sec) | | | | CBR (%) Determined by the Method of the Present Invention | CBR (%) Directly Measured by a Conventional Method |
|---|---|---|---|---|---|---|
| | Measurement No. | | | | | |
| | 1 | 2 | 3 | Average | | |
| Upper Subbase | 330 | 346 | 353 | 343 | 120 | 113* |
| Lower Subbase | 282 | 290 | 294 | 289 | 74 | 69* |
| Subgrade Soil | 183 | 171 | 180 | 178 | 1.8 | 1.8 |

* Adjusted CBR values

Table 1

As to the specific locations of the detectors, the vibrator was placed on the road surface and the first detector was placed 25cm (center-to-center) away from the vibrator. The second detector was placed further away from the vibrator and 20 cm (center-to-center) from the first detector on an imaginary line passing through the centers of the vibrator and the first detector. Various vibration frequencies were used ranging from 20 to 10,000 Hz.

As shown in Table 1, the CBR values obtained by the method of the present invention closely agree with the CBR values obtained by a conventional method by directly testing the layers for CBR values.

The preferred embodiments of the present invention can provide a method of surveying subsurface layer conditions of the ground without destroying the layers to be investigated and can also provide a method of surveying subsurface layer conditions of the ground speedily and economically.

## Claims

**1.** A method of surveying and determining thicknesses and properties of subsurface layers of the ground (1) without excavation, said method comprising the steps of:

a) positioning at predetermined intervals on the ground a ground vibrator (2) which transmits waves of vibration energy of predetermined frequencies and a plurality of detectors (3) which detect said waves of vibration energy;

b) exciting the ground by said ground vibrator (2) at said predetermined frequencies allowing said waves of vibration energy to propagate through said subsurface layers;

c) detecting said waves of vibration energy by said detectors (3) and obtaining propagation velocities of said waves for each of said predetermined frequencies;

d) calculating the respective wavelengths of said predetermined frequencies and determining one half wavelengths for each of said predetermined frequencies;

e) identifying each of said propagation velocities with the average propagation velocity of the corresponding wave propagated through the subsurface ground at the depth equal to the corresponding determined one half wavelength;

f) determining a first correlation between the depth of the subsurface ground and the propagation velocity for a plurality of depths; and

g) determining the layer structure and the thickness of each of said subsurface layers utilizing said first correlation.

**2.** A method of surveying and determining thicknesses and properties of subsurface layers of the ground without excavation according to claim 1, said method also comprising the steps of:

a) determining a second correlation between the property of the material which constitutes each of said subsurface layers and the corresponding wave propagation velocity; and

b) determining the property of the material of each of said subsurface layers utilizing said second correlation.

3. A method of surveying and determining thicknesses and properties of subsurface layers of the ground without excavation according to claim 2, wherein the property of the material of each of said subsurface layers is expressed in its bearing strength ratio.

4. A method of surveying and determining thicknesses and properties of subsurface layers of the ground without excavation according to claims 1, 2 or 3, said method also comprising:
a) obtaining an average wave propagation velocity $\overline{V}_n$ for the subsurface ground having a depth $D_n$;
b) obtaining an average wave propagation velocity $\overline{V}_{n-1}$ for the subsurface ground having a depth $D_{n-1}$; and
c) obtaining the wave propagation velocity $V_n$ for the subsurface ground layer ranging from the depth $D_n$ to the depth $D_{n-1}$ from the following formula:

$$V_n = \frac{D_n \cdot \overline{V}_n - D_{n-1} \cdot \overline{V}_{n-1}}{D_n - D_{n-1}}$$

## Patentansprüche

1. Verfahren zur Untersuchung bzw. Vermessung und Bestimmung von Dicken und Eigenschaften unterirdischer Schichten des Bodens (1) ohne Ausgrabung, wobei das Verfahren die Schritte umfaßt:
a) Positionieren eines Bodenschwingungserzeugers bzw. -vibrators (2) in vorgegebenen Abständen am Boden, wobei der Bodenschwingungserzeuger (2) Schwingungsenergiewellen von vorgegebenen Frequenzen überträgt, und von mehreren Detektoren (3), welche die Schwingungsenergiewellen messen bzw. nachweisen;
b) Anregen des Bodens durch den Bodenschwingungserzeuger (2) bei den vorgegebenen Frequenzen, so daß sich die Schwingungsenergiewellen durch die unterirdischen Schichten ausbreiten können;
c) Messen bzw. Nachweisen der Schwingungsenergiewellen durch die Detektoren (3) und Erzielen von Ausbreitungsgeschwindigkeiten der Wellen für jede der vorgegebenen Frequenzen;
d) Berechnen der entsprechenden Wellenlängen der vorgegebenen Frequenzen und Bestimmen einer halben Wellenlänge für jede der vorgegebenen Frequenzen;
e) Identifiziren bzw. Gleichsetzen von jeder Ausbreitungsgeschwindigkeit mit der mittleren Ausbreitungsgeschwindigkeit der entsprechenden Welle, die sich durch den unterirdischen Boden in einer Tiefe ausbreitet, welche der entsprechenden ermittelten halben Wellenlänge entspricht;
f) Bestimmen einer ersten Korrelation zwischen der Tiefe des unterirdischen Bodens und der Ausbreitungsgeschwindigkeit für mehrere Tiefen; und
g) Bestimmen der Schichtstruktur und der Dicke von jeder der unterirdischen Schichten unter Verwendung der ersten Korrelation.

2. Verfahren zur Untersuchung bzw. Vermessung und Bestimmung von Dicken und Eigenschaften unterirdischer Schichten des Bodens ohne Ausgrabung nach Anspruch 1, dadurch gekennzeichnet, daß das Verfahren außerdem die Schritte umfaßt:
a) Bestimmen einer zweiten Korrelation zwischen der Eigenschaft des Materials, das jede der unterirdischen Schichten bildet, und der entsprechenden Wellenausbreitungsgeschwindigkeit; und
b) Bestimmen der Eigenschaft des Materials von jeder der unterirdischen Schichten unter Verwendung der zweiten Korrelation.

3. Verfahren zur Untersuchung bzw. Vermessung und Bestimmung von Dicken und Eigenschaften unterirdischer Schichten des Bodens ohne Ausgrabung nach Anspruch 2, dadurch gekennzeichnet, daß die Eigenschaft des Materials von jeder der unterirdischen Schichten als deren Tragfähigkeitsverhältnis ausgedrückt wird.

4. Verfahren zur Untersuchung bzw. Vermessung und Bestimmung von Dicken und Eigenschaften unterirdischer Schichten des Bodens ohne Ausgrabung nach Anspruch 1, 2 oder 3, dadurch gekennzeichnet, daß das Verfahren außerdem umfaßt:

a) Erzielen einer mittleren Wellenausbreitungsgeschwindigkeit $\overline{V}_n$ für den unterirdischen Boden mit einer Tiefe $D_n$;
b) Erzielen einer mittleren Wellenausbreitungsgeschwindigkeit $\overline{V}_{n-1}$ für den unterirdischen Boden mit einer Tiefe $D_{n-1}$; und
c) Erzielen der Wellenausbreitungsgeschwindigkeit $V_{n-1}$ für die unterirdische Bodenschicht im Bereich von der Tiefe $D_n$ bis zur Tiefe $D_{n-1}$ aus folgender Formel:

$$V_n = \frac{D_n \cdot \overline{V}_n - D_{n-1} \cdot \overline{V}_{n-1}}{D_n - D_{n-1}}$$

## Revendications

1. Procédé d'arpentage et de détermination d'épaisseurs et de propriétés de couches souterraines du sol (1) sans excavation, ledit procédé comprenant les étapes qui consistent :
   a) à placer à intervalles prédéterminés sur le sol un vibrateur (2) de sol qui émet des ondes d'énergie vibratoire de fréquences prédéterminées et plusieurs détecteurs (3) qui détectent lesdites ondes d'énergie vibratoire ;
   b) à exciter le sol par ledit vibrateur (2) de sol auxdites fréquences prédéterminées en permettant auxdites ondes d'énergie vibratoire de se propager à travers lesdites couches souterraines ;
   c) à détecter lesdites ondes d'énergie vibratoire à l'aide desdits détecteurs (3) et à obtenir les vitesses de propagation desdites ondes pour chacune desdites fréquences prédéterminées ;
   d) à calculer les longueurs d'ondes respectives desdites fréquences prédéterminées et à déterminer une demi-longueur d'onde pour chacune desdites fréquences prédéterminées ;
   e) à identifier chacune desdites vitesses de propagation avec la vitesse moyenne de propagation de l'onde correspondante propagée à travers le sol souterrain à la profondeur égale à la demi-longueur d'onde déterminée de façon correspondante ;
   f) à déterminer une première corrélation entre la profondeur du sol souterrain et la vitesse de propagation pour plusieurs profondeurs ; et
   g) à déterminer la structure stratifiée et l'épaisseur de chacune desdites couches souterraines en utilisant ladite première corrélation.

2. Procédé d'arpentage et de détermination d'épaisseurs et de propriétés de couches souterraines du sol sans excavation selon la revendication 1, ledit procédé comprenant également les étapes qui consistent :
   a) à déterminer une seconde corrélation entre la propriété de la matière qui constitue chacune desdites couches souterraines et la vitesse de propagation d'onde correspondante ; et
   b) à déterminer la propriété de la matière de chacune desdites couches souterraines en utilisant ladite seconde corrélation.

3. Procédé d'arpentage et de détermination d'épaisseurs et de propriétés de couches souterraines du sol sans excavation selon la revendication 2, dans lequel la propriété de la matière de chacune desdites couches souterraines est exprimée sous la forme de son taux de portance.

4. Procédé d'arpentage et de détermination d'épaisseurs et de propriétés de couches souterraines du sol sans excavation selon les revendications 1, 2 ou 3, ledit procédé consistant aussi :
   a) à obtenir une vitesse moyenne de propagation d'onde $\overline{V}_n$ pour le sol souterrain ayant une profondeur $D_n$ ;
   b) à obtenir une vitesse moyenne de propagation d'onde $\overline{V}_{n-1}$ pour le sol souterrain ayant une profondeur $D_{n-1}$ ; et
   c) à obtenir la vitesse de propagation d'onde $V_n$ pour la couche souterraine du sol allant de la profondeur $D_n$ jusqu'à la profondeur $D_{n-1}$ à partir de la formule suivante :

$$V_n = \frac{D_n \cdot \overline{V}_n - D_{n-1} \cdot \overline{V}_{n-1}}{D_n - D_{n-1}}$$

FIG. 1

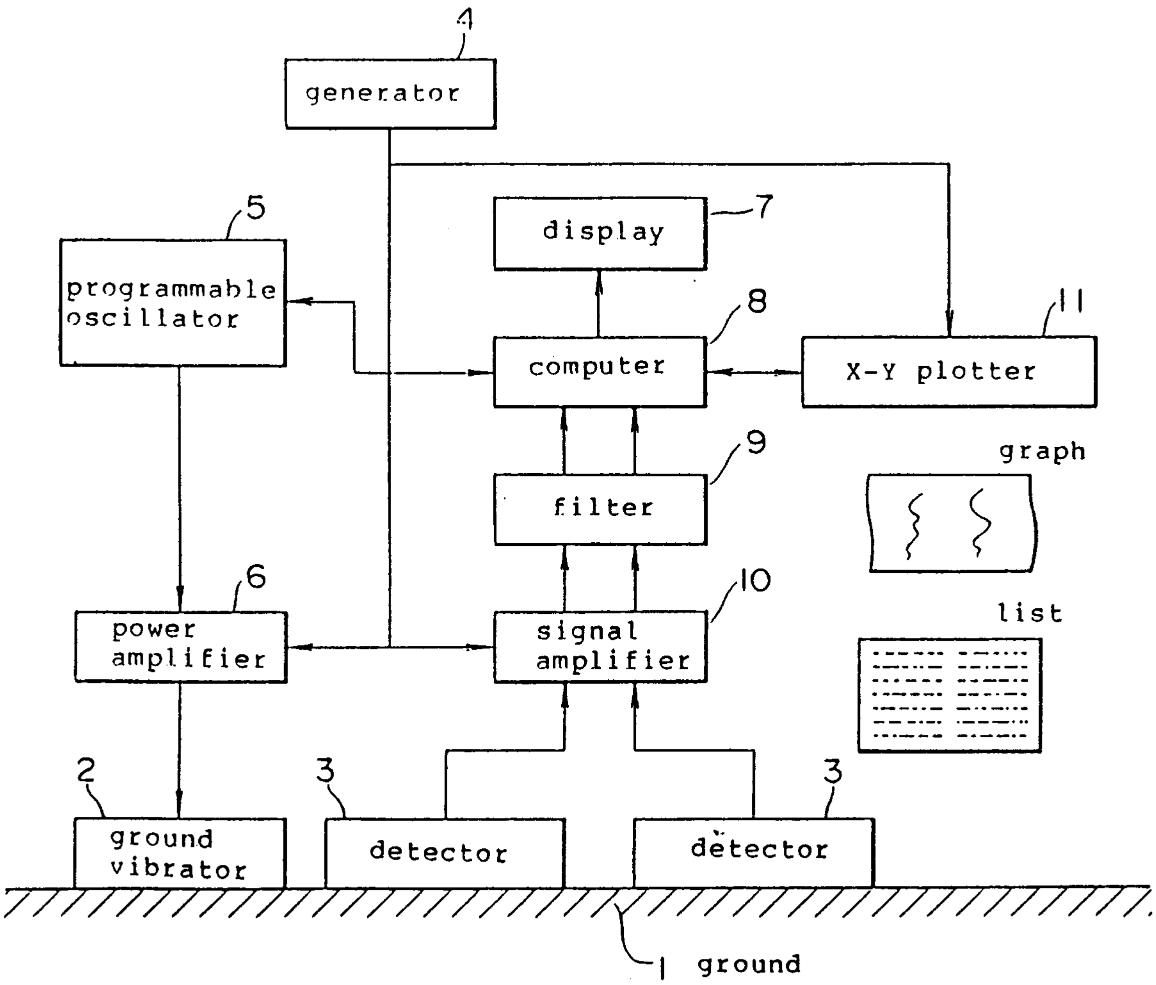
4
generator
5
programmable oscillator
display
7
8
computer
X-Y plotter
11
9
filter
graph
6
power amplifier
10
signal amplifier
list
2
ground vibrator
3
detector
3
detector
1 ground

FIG. 2

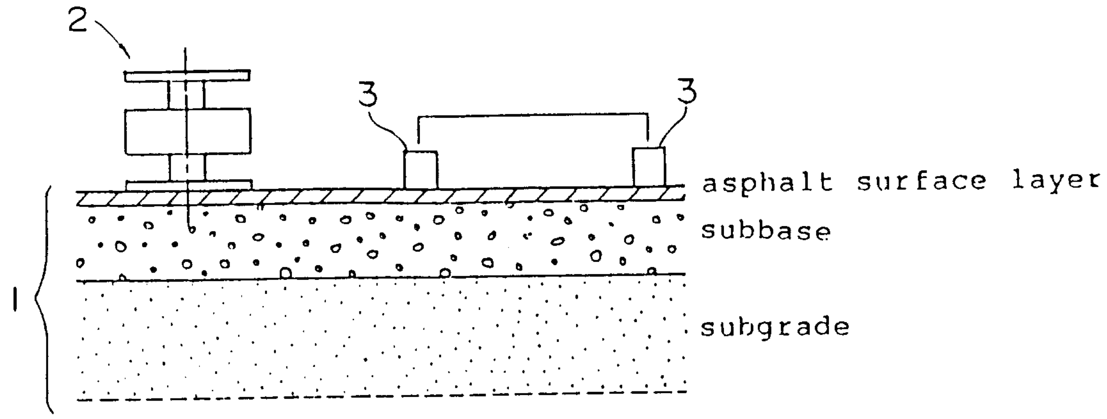


FIG. 3

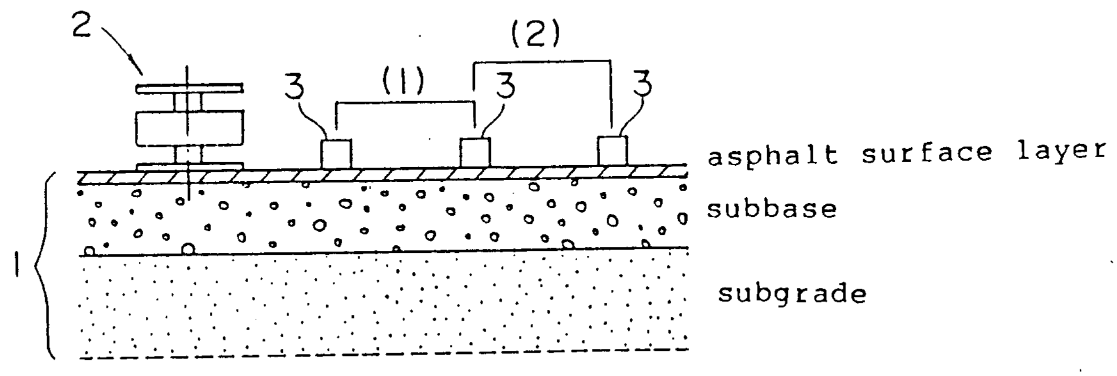


FIG. 4

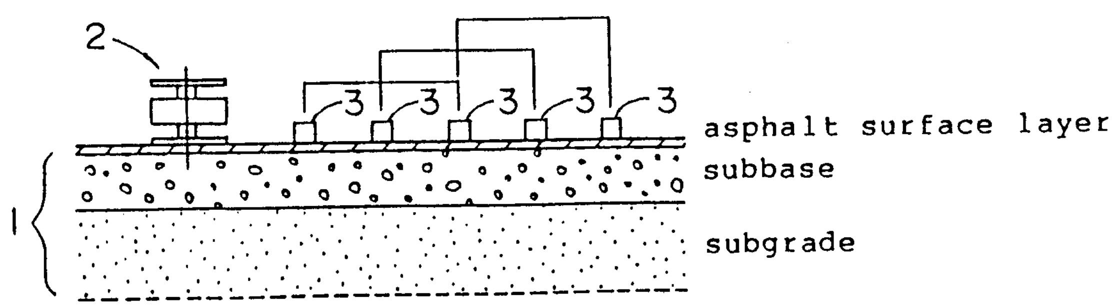

FIG. 5

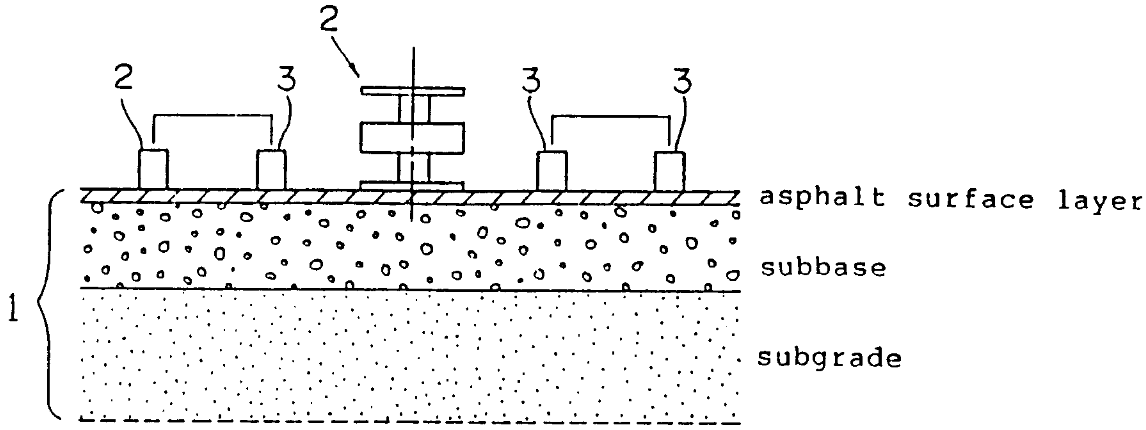
2
2
3
3
3
asphalt surface layer
subbase
1
subgrade

FIG. 6

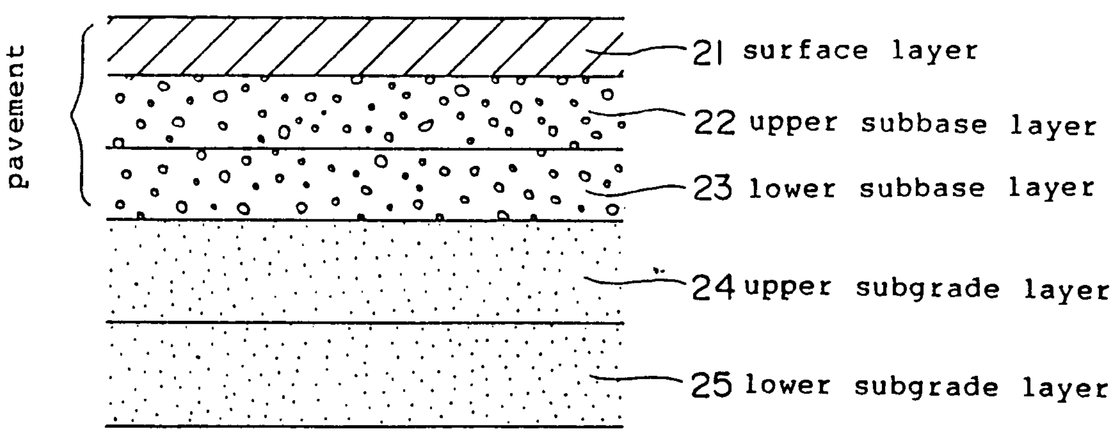
pavement
21 surface layer
22 upper subbase layer
23 lower subbase layer
24 upper subgrade layer
25 lower subgrade layer

FIG. 7

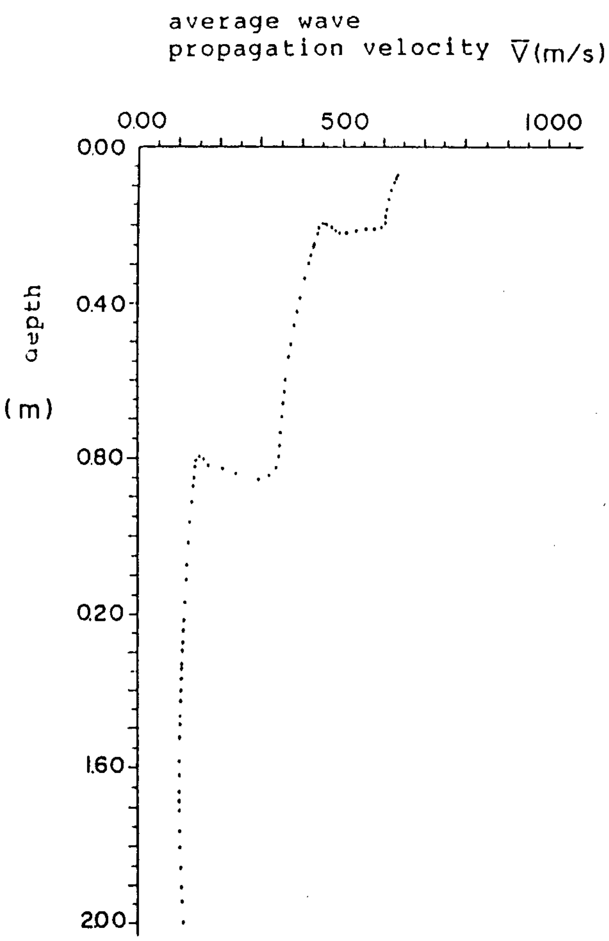
average wave
propagation velocity V̄(m/s)
0.00
500
1000
0.00
0.40
0.80
0.20
1.60
2.00
depth
(m)

FIG. 8

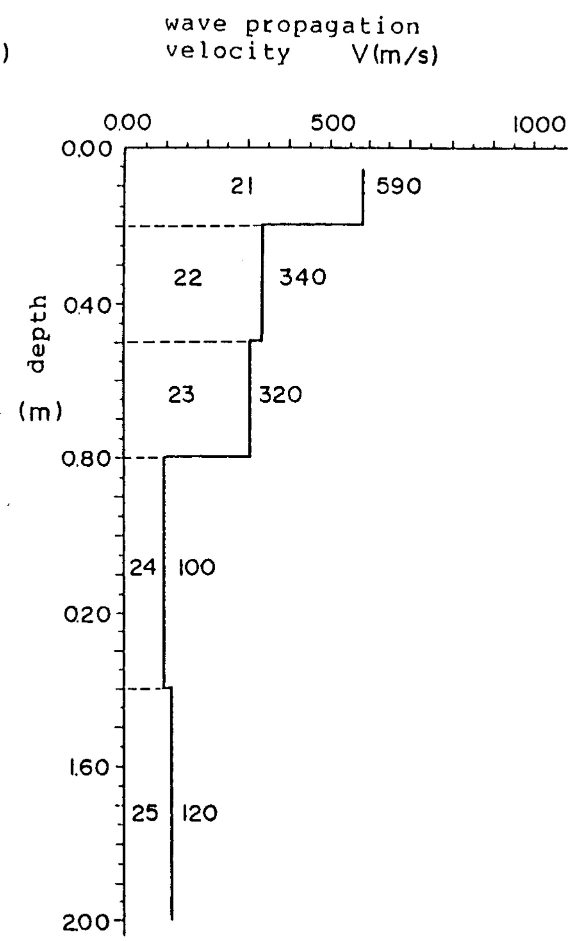
wave propagation
velocity V(m/s)
0.00
500
1000
0.00
0.40
0.80
0.20
1.60
2.00
depth
(m)
21
590
22
340
23
320
24
100
25
120

FIG. 9

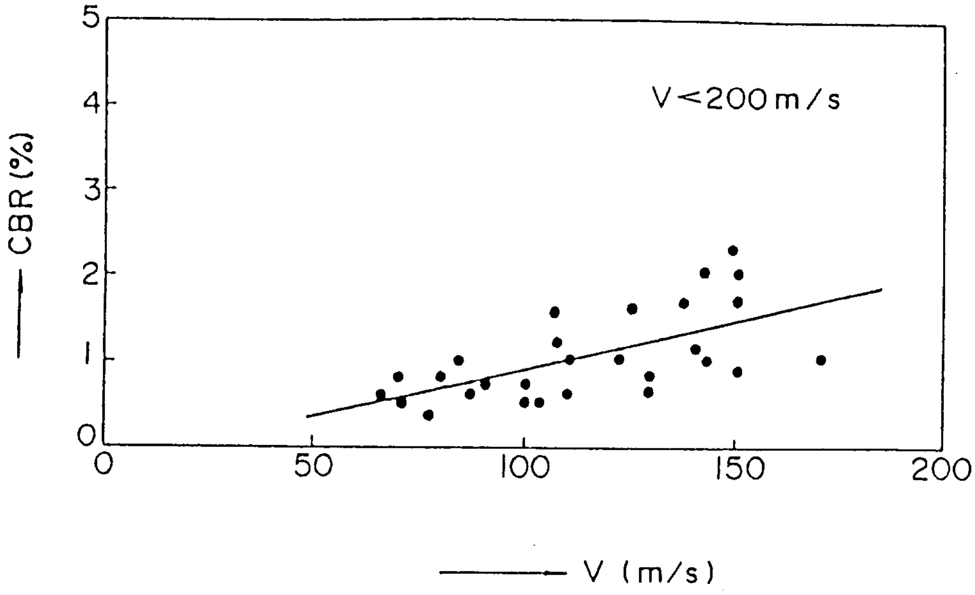
V<200 m/s
CBR (%)
V (m/s)
0
1
2
3
4
5
50
100
150
200

FIG. 10

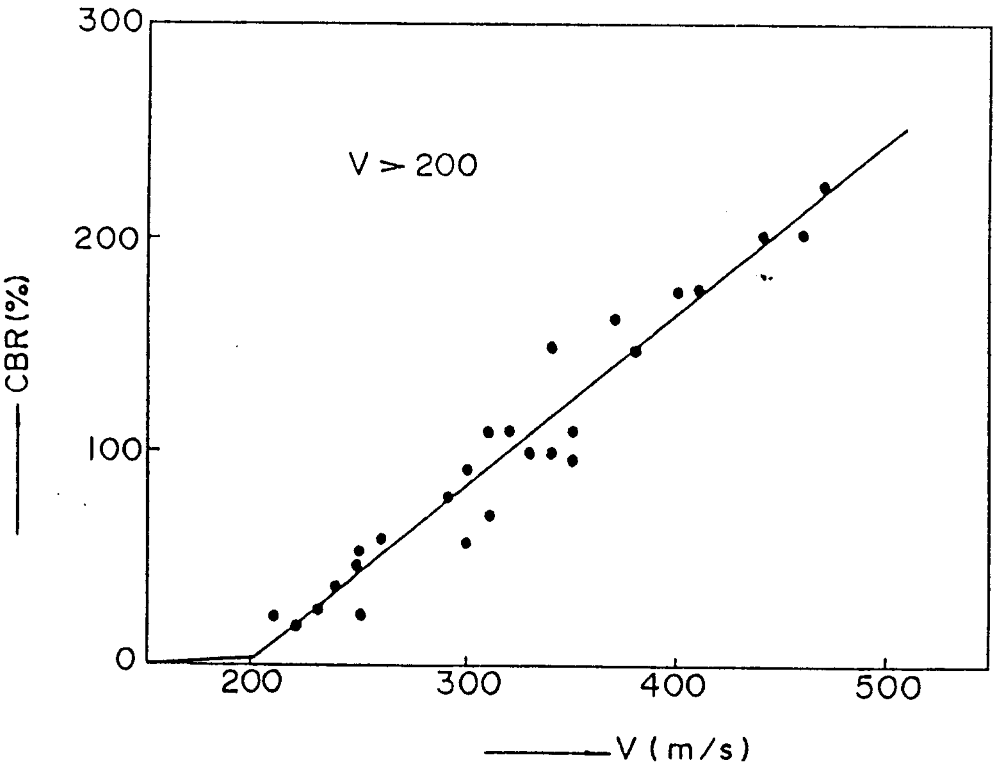
V > 200
CBR (%)
V (m/s)
0
100
200
300
400
500